# EUROPEAN PATENT SPECIFICATION

(11) **EP 2 082 980 B1**
(45) Date of publication and mention of the grant of the patent: **08.02.2012**
(21) Application number: 09150860.6
(22) Date of filing: 19.01.2009
(51) Int. Cl.: B65G 51/04, B65F 5/00

(54) **A centralised hospital refuse transport and collection system**
Zentralisiertes Krankenhausabfalltransport und -sammelsystem
Système centralisé de collecte et de transport de déchets hospitaliers

(30) Priority: 24.01.2008 IT MI20080109
(43) Date of publication of application: 29.07.2009
(73) Proprietor: Sitrain S.r.l., 20010 Bareggio (MI) (IT)
(72) Inventor: Paracchini, Giancarlo, 20010 Bareggio (Milano) (IT)
(74) Representative: Corradini, Corrado

(56) References cited:
- EP-A- 0 433 756
- WO-A-95/18679
- WO-A-98/51082
- GB-A- 1 047 634
- US-A- 2 710 728
- US-A- 3 490 813
- US-A- 4 557 638
- US-A- 4 993 882
- US-A1- 2004 057 801
- US-A1- 2006 255 191

## Description

The invention relates to a method and a plant for transporting and collecting disposable containers.

In the prior art, management of hospital refuse presents a certain number of problems.

Movement of refuse internally of the hospital or the health structure is generally done by using special containers, which are transported by the personnel in trucks.

This system means that the operative, in order to carry out their work, has to pass from one ward to another, carrying with him or her containers which might be potentially infectious, and often in precarious conditions and with possible leakage of liquids or other substances which might be detrimental to health.

Similar risks are run at refuse collection points, where there might be precarious and critical health conditions coexisting with the passage of the nursing personnel and possibly even patients.

A further problem, not without important economic implications, is the disposing of this refuse, which has to be made assimilable to normal refuse in order to avoid any danger of infection and contamination.

At present disposal or hospital refuse is very expensive and requires special plants, only present at some points on the territory and in which the refuse is subjected to expensive sterilisation operations in order to be made similar to normal refuse.

In document US 2004/057801 an apparatus is described in which hospital refuse, and in particular needles or similar, are introduced into containers suitable to be transported by a pneumatic system that has a plurality of stations of introduction and at least a destination station. Every container has an element that identifies, by means of a univocal code, the single container and the system has also sensors in the introduction stations and suitable to alert the presence of a container and sensors in close proximity of the destination station.

The aim of the present invention is to obviate the drawbacks by means of a transport and collection system for removing and processing infected hospital refuse, which obviates movement of the containers internally of the hospital or the health structure on trucks or like implements guided by the hospital personnel.

A further aim of the invention is to enable removal of hospital refuse with their particularly critical characteristics, in a way which is economic and safe for the environment and for the personnel involved.

These aims are attained with a method for transporting and collecting disposable containers of hospital refuse according to claim 1 and a plant for collecting and transporting disposable containers according to claim 3. Centralised system of transport and collection of hospital refuse, can comprise a plant that enables pneumatic transport of throwaway containers for containing hospital refuse, wherein the plant exhibits a plurality of dispatch stations of the hospital refuse containers, located in different positions internally of a hospital structure, the pneumatic hospital refuse transport being realised using hermetically-sealed straight and curved tubes which tubes enable transport of the container up to a collection centre by means of at least an aspirating group located such as to cooperate with the collection centre.

Use in such pneumatic systems is also made of a container for pneumatic transport of hospital refuse, constituted by a container body made of a bonded material, having a low toxicity and being resistant to sharp bodies which might be inserted into it, and also having a bonded lid, and being intended to be disposable after a single use.

Further characteristics of the invention emerge from the dependent claims.

Among the advantages of the invention is the fact that the system enables each hospital department or ward to have its own odourless and clean small station available, in which the container for hazardous refuse can be inserted. The refuse is then removed completely safely and silently, without there being any possibility of contamination.

Further, the system enables storing of containers for any necessary safety controls, or shredding of the container and sterilisation in order to render to refuse inert and therefore assimilable to common types of refuse, all while dispensing with the need for slow and laborious handovers of management, transport and destruction of the special infected hospital refuse, with truly advantageous economic aspects.

Further characteristics and advantages of the invention will become evident from a reading of the following description, provided by way of non-limiting example with the aid of the figures illustrated in the accompanying tables of the drawings, in which:

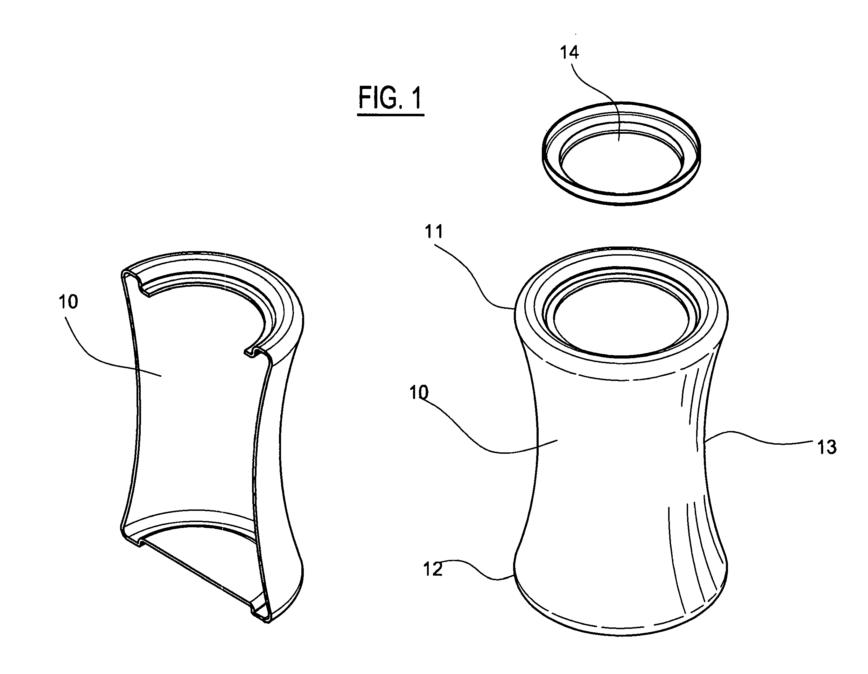

figures 1 a -1d illustrate a single-use disposable container specifically designed for the centralised system of transport and collection of hospital refuse of the invention;
figure 2 illustrates a plant diagram relating to the centralised system of transport and collection of hospital refuse the invention;
figure 3 illustrates a variant of the system of the invention;
figure 4 illustrates a further variant of the system of the invention; and figures 5a-5h illustrate the stage of inserting the container for hospital refuse of the plant.

The figures illustrate a centralised system of transport and collection of hospital refuse of the invention, constituted by a series of components designed to realise pneumatic transport, in special tubes, of dispensable containers for containing hospital refuse.

In particular, the containers 10 used are made of a bonded plastic material and are resistant sharp bodies which might be inserted there-into and are 300 mm in diameter and 550 mm in height.

The containers 10 exhibit a bonded lid 14 and are able to ensure transport of 10 Kg of material. These measurements and weights are intended to be by way of realisation of a possible embodiment, but are not limiting with regard to possible variants of the container.

The container exhibits an elongate shape provided with an upper end 11 and a lower end 12, which have an external diameter which is substantially equal to the internal diameter of the pneumatic tubes.

The upper end 11 and the lower end 12 of the container are connected to one another by a curved surface 13, which in a section made along a plane passing through the container axis has an angle of curvature which is substantially equal to the internal angle of curvature of the curved tubes used in the present plant, such as to facilitate curved travel during the journey of the container internally of the plant.

The container 10 can also exhibit a carrying handle and a bonded lid, and can exhibit an electronic chip of the transponder type so that the sender's details can be recognised and stored.

The container 10 is designed to be disposable, as the material it is made of is selected on the basis of low toxicity in order that it can be destroyed by heat, as will be better described herein below.

An example of material in which the container can be realised is polyethylene.

The container 10 used is a dispensable container.

In any case, apart from what has been mentioned, the material the container 10 is constituted by is such as to make is extremely resistant to impacts, and such as not to suffer from any introduction of sharp objects such as needles, shards of glass etc.

The container 10 is also designed to be easily pilable for easy storage, as there are situations in which the refuse has to be conserved for a certain amount of time, before being destroyed, for example in accordance with conditions set down by law.

The invention further comprises a centralised transport and collection plant which is provided with a plurality of dispatch stations 20 of the refuse containers, which are located in various positions internally of the hospital structure and are constituted by an apparatus for introduction of the containers into the pneumatic transport system, described in more detail herein below.

Access to the system is enabled following introduction by the operative 21 of an authorisation key or following reading of a magnetic identification card belonging to the operator.

When the container 10 has been inserted, sensors check that the appropriate container has been introduced, also checking the correct positioning of the lid 14, thus preventing any extraneous objects from being introduced and also checking that the lid 14 has been correctly closed.

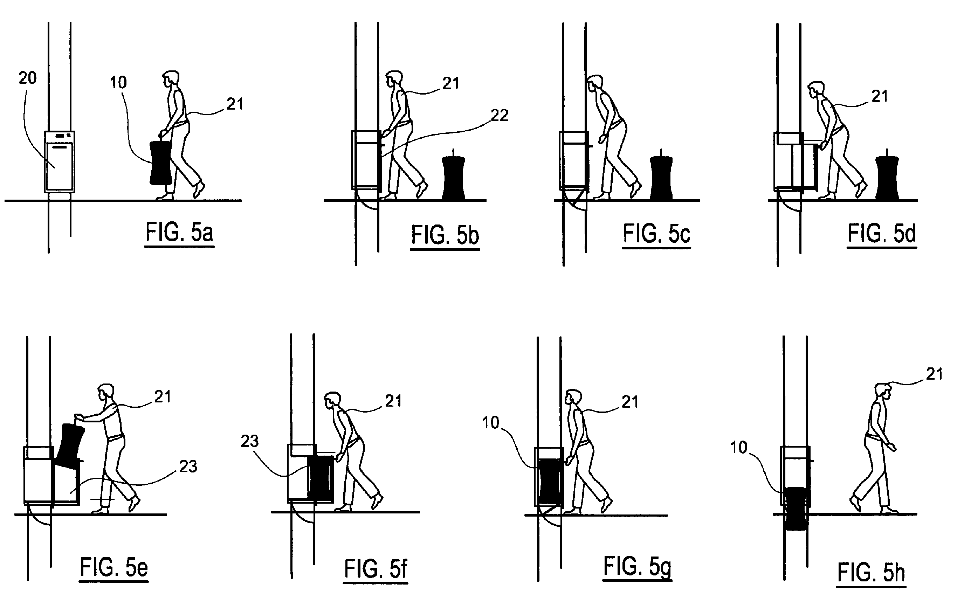

A possible embodiment of this control can be effected by inserting the closed container in the vertical position - see for example figures 5a to 5h - and checking by sensor that a band on the lid of the container is in the correct position.

Each request for access with identification of the operator is also recorded on a computer which manages the whole system.

In more detail, the pneumatic transport system of hospital refuse is realised using straight tubes 30 and curved tubes 31, hermetically sealed and made of a plastic material or of stainless steel, which by means of aspirating groups 32 located at a collection centre 40 of the refuse enable transport of the container 10 via the dispatch stations 20 up to the collection station, at a speed of about 7 to 10 m/sec.

The collection station 40 can also be situated at several kilometres' distance from the hospital.

The tubes have branch-offs or forks in order to shorten journey times. On the basis of the possibilities of connections internally of the buildings to be connected, these forks are controlled by special electromechanical devices which enable selection of the path to be followed while maintaining the hermetic integrity of the system. While waiting for containers to be sent, the system is kept constantly under depression in order to prevent any leaking of infected air or unpleasant odours.

There now follows a description of the system of arrival of the containers containing the refuse at a collection station 40.

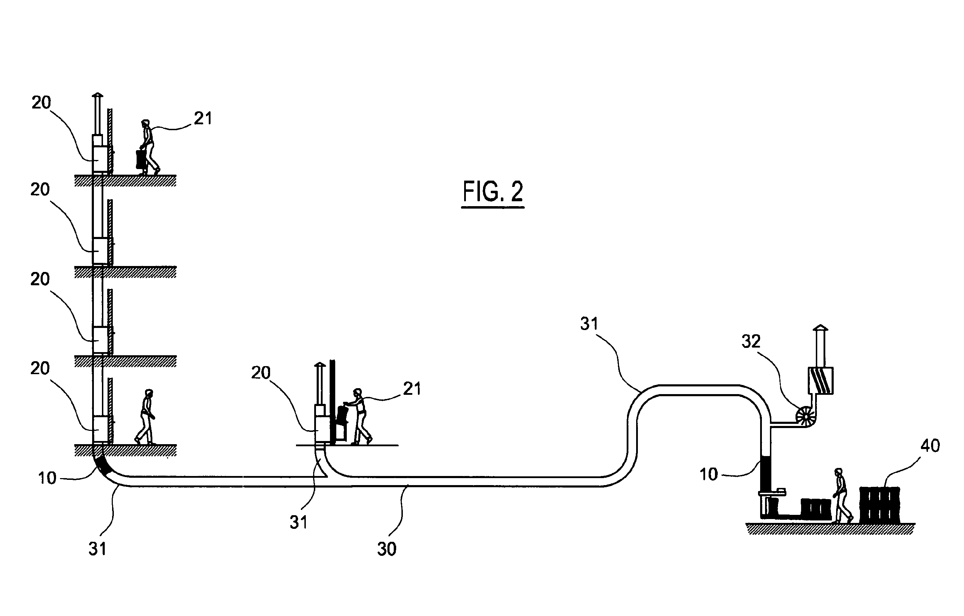

The station 40 can include unloading of the containers for manual movement thereof (figure 2), or their storage in large containers for traceable deposit of the containers. Each container is deposited internally of the large container and its position is identified by the managing computer which enables the dispatch station details to be identified, as well as the name of the operative and the time and date of sending.

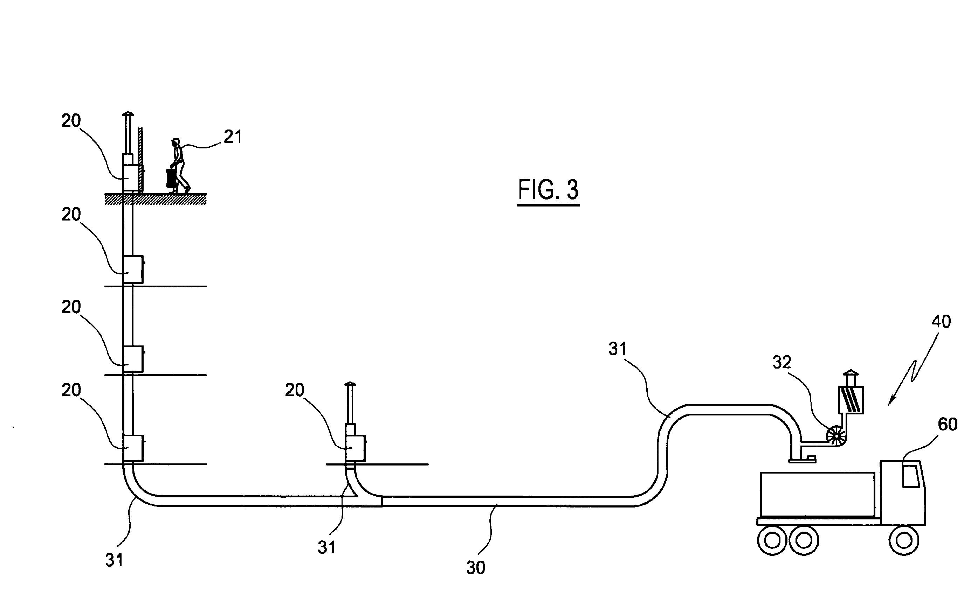

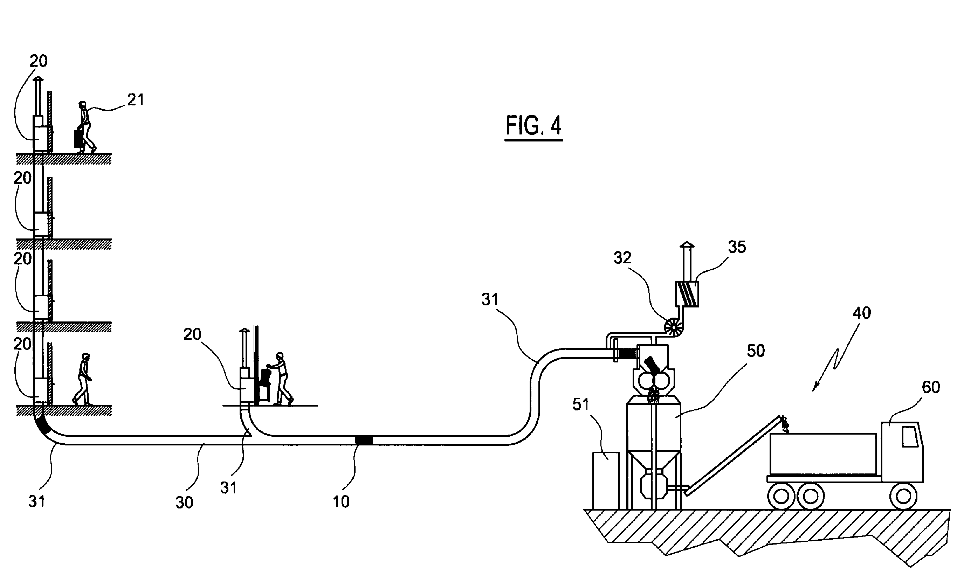

A further possibility (figure 3) is that the containers are automatically loaded on lorries 60 in order to be transported to a remote disposal station therefor. A further possibility (figure 4) is shredding and sterilising the containers with the relative refuse contained therein.

When the container containing the infected material has arrived at the collecting station, it is automatically introduced into a tank 50, still with the system under hermetic seal, where the container is shredded together with its contents.

In this case, a plurality of containers containing hospital refuse is deposited internally of the tank 50 of a treatment plant 51 for hospital refuse up to when the quantities established for beginning the sterilisation treatment are reached, upon which the tank 50 is closed hermetically and the procedure of sterilisation is activated by injection of steam at a high temperature and at the same time a mixer keeps the mass of refuse in motion as it is shredded. When the minimum temperature of 180°C has been reached, it has to be maintained for at least 20 minutes, at the end of which the walls of the tank are cooled by introduction of cold air into a hollow or inter-wall space, afforded externally of the tank 50 containing the refuse.

Thus the steam cools on the internal walls of the tank and causes dripping of water which is collected by a special guttering system which conveys the water into the water discharge drain.

Thus the cooled refuse loses all infectious power and is discharged from the discharge mouth located in the lower zone of the tank and is collected in special container for transport to the disposal station as normal-assimilated refuse.

During the process of sterilisation, hospital departments can however send containers to the collecting station; these containers will be kept in a tract of tubing which can function as a deposit as the containers wait to enter into the shredding and sterilising cycle.

The described system is also provided with a computerised management and control system which by means of electronic cards managed by microprocessors installed in proximity of each apparatus of the plant enables a correct functioning of the apparatus, controlling request for access to the system, switcher devices of the various branches of the plant, air flow opening solenoids, stop devices, container slowing devices and storage devices, turbine group activation devices, automatically recording each event by time and date, with a retraceability of the containers deposited in large containers, including the complete sterilisation process with the various procedures.

The computer is provided with special real-time plant viewing software with televised control at a technical assistance centre.

Finally a filtering, treatment and expulsion system of the conveying air and the sterilising tank is provided. Before the air used in the system is expelled into the atmosphere, disinfection is performed as though the air were infected, even though the transport excludes such an eventuality as the containers are bonded and suitably sturdy for the transport. The air is disinfected by being passed through special filters 35 saturated with a disinfectant solution, followed by passage through a zone struck by ultraviolet rays before being finally expelled into the atmosphere. The process is specially dimensioned to exclude, should there be infected air, that this air would be expelled while there was even a vestigial risk of environmental contamination.

The functioning of the system will now be described.

The containers 10 are delivered to the special operative 21 (specialised in plastic materials for collection of potentially dangerous and infected refuse). Each container 10 is provided with a special lid which ensures a hermetic sealing and a high mechanical resistance against any possibility of reopening during transport.

The specialised operative 21 manually transports the container 10 up to the dispatch station, introduces a system use reservation key or swipes his personal identification badge and if the plant is free the loading hatch 22 will open. Having pulled out the slide 23, the operative 21 introduces the container 10 and re-closes the slide 23. During closure some points relating to the dimensions of the container 10 are checked, as is the lid 14, as a guarantee that no extraneous matter has been introduced, and that the lid has been correctly closed. The container 10 can be provided with an identifying electronic chip through which a registration and traceability of the container can be made should the container be automatically stored, while a display situated in the despatch station relays operating messages should there be any.

During the stage when access to the system has been requested, should authorisation be given, the various electromechanical devices necessary for selection of the route necessary for aspiration of the container to the central collecting station are activated, as is the air-lock present at the despatch station.

When the hatch is closed, the container enters the transport tube and the aspirating group at the central collecting station is activated. The container thus begins its journey, travelling at a speed of 7 to 8 metres per second. The plant can also function in a system of differentiated refuse collection: this enables the various stations to collect the containers internally of the transport tube, at the bottom of the vertical collecting tube, where they are held back by a section lock on the transport tube. When the plant has completed the delivery presently under way, it automatically sends the container. This enables, in cases where the plant is very large, avoiding long waiting times for the user when introducing the container; maximum waiting time is thus kept down to about 10-15 seconds maximum.

The plant can be provided with special electronic passage detectors for the container, so that its progress can be followed on the managing computer. On arriving in the collecting station the container is slowed down and collected in the mobile positioning arm, which at the discharge of the container automatically locates said container in the large storage container; at this point the container's position is stored in the managing computer. In some cases, according to law the refuse coming from the hospitals, and in particular from departments such as operating theatres, may not be immediately disposed of but must wait for a predetermined amount of time before this can be done.

If storage is not required, the container that has arrived at the collecting station is unloaded at the point of inlet to the shredding/sterilising group, and the shredding process commences.

Sterilisation is commenced when a predetermined quantity of containers has been reached.

Once the programmed quantity has been reached the sterilisation cycle is activated.

The transport plant continues however to receive any containers sent to it, storing them internally of the final part of the tube arriving at the collecting station.

On activation of the cycle the sterilising apparatus injects steam at high concentration up to reaching a temperature of 180°C, which is maintained for 20 minutes to ensure sterilisation has taken place.

A special mixer guarantees that all the refuse is treated.

When the sterilisation time is complete, the container is cooled by running cold water in the hollow space between the two external walls of the treatment tank.

The steam condenses on the internal surface and the water is collected by a specially guttering in order that the refuse does not become too wet.

At the end of the procedure the refuse is automatically discharged from the bottom hatch of the tank and conveyed to the collection hopper or other containers in order to be removed.

When the discharge operation is complete, the container shredding cycle is repeated, as is the operating stage described.

The air being expelled in the collecting station is treated to remove any bacteria, in the hypothetical eventuality that a container might have been broken open with leakage of infected substances in the transport tubes; thus all the air in the system is forced to pass through a filtering system using suitable sterilising liquid substances and means emitting ultraviolet rays. Even when nothing is being transported, the plant is maintained under depression by operating the special aspirating group; this is to prevent any leakage of odours or infected air from the system. The air which has been aspirated by the conduits is subjected to the same sterilisation treatment before being discharged into the atmosphere.

Obviously modifications or improvements dictated by contingent or special reasons might be brought to the invention, without its forsaking the scope of protection of the following claims.

## Claims

1. A method for transporting and collecting disposable containers (10) of hospital refuse, the disposable containers (10) being provided with a Transponder chip to recognize and store sender's details, the method comprising:
- a phase of inserting the disposable containers (10) into a pneumatic transport system at dispatch stations (20) thereof by means of a request of access to the system following an insertion of an authorisation key by an authorised operative or following a reading of an operative's magnetic identification card,
- a phase of recording sender's details and details of the request of access with identification of the operator into a computer that manages the pneumatic transport system,
- a phase of transporting the disposable containers (10) through the transport system by means of aspirating groups (32) located at a collection station (40) of the refuse,
- a phase of initiating disposal of the containers at the collection station (40) by means of a shredding and sterilizing tank (50) when a predetermined quantity of containers (10) has been reached,
- a phase of keeping the arriving containers in a tract of tubing upstream the collecting station while a sterilization and shredding cycle occurs therein.

2. A method according to claim 1, further comprising, in case the refuse comes from an operating theatre department disposal, a phase of storing the container (10) in the collection station (40) waiting a predetermined amount of time before disposal.

3. Plant for collecting and transporting disposable containers destined to contain hospital refuse, the disposable containers (10) being provided with a Transponder chip to recognize and store sender's details, the plant having a computer management system to record such details and comprising a plurality of dispatch stations (20) of the containers (10), connected by hermetically-sealed straight-and-curved tubes to a final collection station (40), the tubes exhibiting a plurality of branch-offs or forks which shorten transport journeys up to the final collection station (40), an aspirating group (32) being provided located such as to cooperate with the refuse collection station (40) for transporting the containers up to the refuse collection station (40), whereby the hermetically-sealed straight-and-curved tubes comprise a vertical branch just upstream of the collection station (40), the containers being retained in the branch by means of a switcher device and in that the central refuse collecting station exhibits means for shredding and sterilising the containers together with the contained refuse.

## Patentansprüche

1. Verfahren zum Transportieren und Sammeln von Einwegbehältern (10) mit Krankenhausabfällen, wobei der Einwegbehälter (10) mit einem Transponder-Chip ausgestattet ist, um die Senderangaben zu erkennen und zu speichern, wobei das Verfahren Folgendes umfasst:
- eine Phase des Einführens der Einwegbehälter (10) in ein pneumatisches Transportsystem an Versandstationen (20) desselben mittels einer Systemzugangsanfrage nach Eingabe eines Berechtigungsschlüssels seitens eines berechtigten Bedieners oder nach Lesen einer Magnetkennkarte des Bedieners,
- eine Phase des Aufzeichnens der Senderangaben und der Zugangsanfrageangaben unter Erkennung des Bedieners in einem Computer, der das pneumatische Transportsystem verwaltet,
- eine Phase des Transportierens der Einwegbehälter (10) durch das Transportsystem mittels Ansauggruppen (32), die an der Abfallsammelstation (40) angeordnet sind,
- eine Phase der Initiierung der Entsorgung der Behälter an der Sammelstation (40) durch einen Zerkleinerungs- und Sterilisierungstank (50), wenn eine vorgegebene Menge von Behältern (10) erreicht wurde,
- eine Phase des Haltens der eintreffenden Behälter in einem der Sammelstation vorgelagerten Rohrabschnitt, während ein Sterilisierungs- und Zerkleinerungszyklus ausgeführt wird.

2. Verfahren nach Anspruch 1, welches bei Eintreffen von Abfällen aus OP-Abteilungen außerdem eine Phase der Lagerung der Behälter (10) in der Sammelstation (40) umfasst, wobei eine vorgegebene Zeit vor der Entsorgung abgewartet wird.

3. Anlage zum Sammeln und Transportieren von Einwegbehältern, die zur Aufnahme von Krankenhausabfällen bestimmt sind, wobei die Einwegbehälter (10) mit einem Transponder-Chip zum Erkennen und Speichern der Senderangaben versehen sind, wobei die Anlage ein Computerverwaltungssystem besitzt, um diese Angaben aufzuzeichnen und mehrere Versandstationen (20) der Behälter (10 ) umfasst, die über hermetisch verschlossene, gerade und gekrümmte Rohre an einer Endsammelstation (40) angeschlossen sind, wobei die Rohre mehrere Abzweigungen oder Gabelungen aufweisen, die die Transportwege zur Endsammelstation (40) verkürzen, wobei eine Ansauggruppe (32) angeordnet ist, um mit der Abfallsammelstation (40) zusammenzuwirken, um die Behälter zur Abfallsammelstation (40) zu transportieren, wobei die hermetisch verschlossenen, geraden und gekrümmten Rohre einen vertikalen Zweig unmittelbar vor der Sammelstation (40) umfassen, wobei die Behälter mittels einer Umschaltgruppe in der Abzweigung zurückgehalten werden und die zentrale Abfallsammelstation Mittel zum Zerkleinern und Sterilisieren der Behälter und der darin enthaltenen Abfälle aufweist.

## Revendications

1. Procédé pour transporter et collecter des contenants jetables (10) de déchets hospitaliers, les contenants jetables (10) étant munis d'une puce Transpondeur pour reconnaître et stocker les détails de l'expéditeur, le procédé comprenant :
- une phase consistant à insérer les contenants jetables (10) dans un système de transport pneumatique à des stations d'expédition (20) de ceux-ci au moyen d'une demande d'accès au système suite à une insertion d'une clé d'autorisation par un opérateur autorisé ou suite à une lecture d'une carte d'identification magnétique opérationnelle,
- une phase consistant à enregistrer les détails de l'expéditeur et les détails de la demande d'accès avec l'identification de l'opérateur dans un ordinateur qui gère le système de transport pneumatique,
- une phase consistant à transporter les contenants jetables (10) à travers le système de transport au moyen de groupes aspirants (32) situés à une station de collecte (40) des déchets,
- une phase consistant à initier l'élimination des contenants à la station de collecte (40) au moyen d'un réservoir de déchiquetage et stérilisation (50) lorsqu'une quantité prédéterminée de contenants (10) a été atteinte,
- une phase consistant à garder les contenants qui arrivent dans une étendue de tuyauterie en amont de la station de collecte tandis qu'un cycle de stérilisation et de déchiquetage s'y produit.

2. Procédé selon la revendication 1, comprenant en outre, au cas où les déchets sont le résultat d'une élimination par un service de bloc opératoire, une phase de stockage du contenant (10) dans la station de collecte (40) dans l'attente d'une période prédéterminée avant l'élimination.

3. Installation pour collecter et transporter des contenants jetables destinés à contenir des déchets hospitaliers, les contenants jetables (10) étant munis d'une puce Transpondeur pour reconnaître et stocker les détails de l'expéditeur, l'installation ayant un système de gestion informatique pour enregistrer de tels détails et comprenant une pluralité de stations d'expédition (20) des contenants (10), reliées par des tuyaux droits et courbés scellés hermétiquement vers une station de collecte finale (40), les tuyaux présentant une pluralité d'embranchements ou de fourches qui raccourcissent les trajets de transport jusqu'à la station de collecte finale (40), un groupe aspirant ( 32) étant prévu et situé de telle manière à coopérer avec la station de collecte des déchets (40) pour transporter les contenants jusqu'à la station de collecte des déchets (40), grâce à quoi les tuyaux droits et courbés scellés hermétiquement comprennent un embranchement vertical juste en amont de la station de collecte (40), les contenants étant retenus dans l'embranchement au moyen d'un dispositif commutateur, et la station de collecte des déchets centrale présente des moyens de déchiquetage et stérilisation des contenants conjointement aux déchets contenus.
